# EUROPEAN PATENT APPLICATION

(11) **EP 4 679 579 A1**
(43) Date of publication of application: **14.01.2026**
(21) Application number: 25165109.7
(22) Date of filing: 20.03.2025
(51) Int. Cl.: H01M 50/107, H01M 50/152, H01M 50/30, H01M 50/342

(54) **LID CLOSURE FOR A SECONDARY CELL**

(30) Priority: 20.03.2024 SE 2430140
(71) Applicant: Northvolt AB, 112 47 Stockholm (SE)
(72) Inventor: Yuen, Kelvin, 72356 Västerås (SE); Höglund, Sophia, 722 14 Västerås (SE); Bein, Dennis, 72228 Västerås (SE); Bellary, Rakshith, 72474 Västerås (SE)
(74) Representative: Engman, Eva Jessica

(57) **Abstract**

There is disclosed herein a cylindrical secondary cell (2000), comprising a cylindrical casing (234) housing an electrode assembly (232), and a lid (200) for closing an open end (234b) of the cylindrical casing (234). The lid (200) comprises a first region (201) extending in a first plane (204), a second region (202) surrounding the first region (201) and extending in a second plane (205) displaced in a first direction from the first plane (201), and a third region (203) surrounding the second region (202) and extending in a third plane (206) displaced in the first direction from the second plane (202). The first region (201) comprises an electrolyte filling hole (207), and the second region comprises a vent (208) configured to vent gases from the cylindrical casing (234). There is also disclosed herein a battery pack including such a cell, and a vehicle including such a battery pack.

## Description

### Technical Field

The present disclosure relates to a secondary cell, a battery assembly comprising such a secondary cell, and a vehicle comprising such a battery assembly.

### Background

In addressing climate change, there is an increasing demand for rechargeable batteries, e.g. to enable electrification of transportation and to supplement renewable energy. Currently, lithium-ion batteries are becoming increasingly popular. They represent a type of rechargeable battery in which lithium ions move from the negative electrode to the positive electrode during discharge and back when charging.

As the demand for rechargeable batteries increases, more and more focus is being placed on production speed and cost. To achieve an effective production of rechargeable batteries, the design of the batteries as well as their manufacturing process can be optimized.

### Summary

The present disclosure aims to provide improved secondary cells and parts thereof. The improvements may be in energy performance, manufacturing efficiency, decreased amount of material used, and assembly simplification, among others.

In particular, according to an aspect of the present disclosure, there is provided a cylindrical secondary cell, comprising a cylindrical casing housing an electrode assembly, and a lid for closing an open end of the cylindrical casing.

The lid comprises a first region extending in a first plane, a second region surrounding the first region and extending in a second plane displaced in a first direction from the first plane, and a third region surrounding the second region and extending in a third plane displaced in the first direction from the second plane. The first region comprises an electrolyte filling hole, and the second region comprises a vent configured to vent gases from the cylindrical casing. Each region may define a surface, and preferably the surface is substantially flat in the plane. In some examples, 'surrounding' may mean entirely surrounding (i.e., enclosing), or at least partially surrounding.

The first region and the second region may be joined by a surface that extends substantially axially, such that a 'step' is formed between the first region and the second region. The interface between regions may also have some radial extension, depending on the implementation, that bridges between the planes in which the regions extend. The interface may be preferably configured so as to maintain a substantially constant material thickness, thereby reducing the risk of creating weaker or stronger seams on the lid that could lead to unexpected points of failure.

Viewed from one perspective, a lid according to aspects of the present disclosure has a 'stepped' profile, having at least two steps down towards the radial center of the lid, the lid being substantially circular in its radial extension so as to correspond to the open end of the cylindrical casing that the lid is configured to close.

In some examples, one, two, or preferably each of the first, second, and third regions is circular. Further, in preferred examples, each of the first, second, and third regions is concentric with each other. In this way, the lid may be substantially rotationally symmetric and thus the construction of the lid and cell may be simplified, e.g., by mitigating a requirement for rotational alignment between components during manufacture.

Further to this effect, the electrolyte filling hole is preferably arranged centrally in the first region. Hence, an electrolyte filling step, which may be downstream in the manufacturing process from the assembly of the lid onto the casing, may be simplified as it can be ensured that the electrolyte filling hole is in a substantially similar position for each cell.

The electrolyte filling hole may be circular in shape and may be formed as a through-hole having substantially constant cross-section. The size of the electrolyte filling hole may be configured according to an expected size of an electrolyte filling port.

The vent on the second region may be configured as a thinning, partial perforation, or other weakening in the second region of the lid. More than one vent may be formed on the second region, in some examples. For example, a plurality of vents may be arranged with a circular symmetry in the second region.

In a particular example, the vent is formed as a grooved thinning formed on the outer and inner surfaces of the second region, in an open shape of a semicircle, arc, rounded triangle, or other open shape. Hence, when there is a build-up of gas pressure inside the cell, the weakened portion may break or rupture, and a portion of the lid defined within the open shape may partially lift, being anchored to the lid via a non-weakened portion at the opening of the open shape, and the gasses may escape through this rupture.

In another example, the vent is formed as a groove only on an outer surface of the second region of the lid. The profile of the groove may be formed of two substantially trapezoidal shapes, wherein a first trapezoidal shape comprises one part of a groove further towards the outer surface, and a second trapezoidal shape extends further into the lid from the outer surface, thereby forming a 'sub-groove' within the groove. The second trapezoidal shape is preferably smaller than the first trapezoidal shape and arranged centrally thereon.

According to such an example, the reliability of vent rupture may be improved by focusing the location of the rupture on the sub-groove, and the manufacturing of the vent may be simplified as it can be formed only on the outer surface of the lid or only on the inside surface of the lid.

The present disclosure may be implemented in any suitable cylindrical cell application, such as a conventional '2170' configuration (21 mm in diameter, 70 mm in length), or in a larger format '4695' configuration (i.e., 46 mm in diameter, 95 mm in length), or in variations thereof. Preferred embodiments of the present disclosure may be more similar to the '4695' configuration, e.g., 4680, 46105, etc.

The radii of the first, second, and third regions may be configured to achieve an improved structural rigidity, simplified manufacture, and/or enhanced specialized functionality, as discussed elsewhere herein.

The first region may have an outer radius between 5 mm and 10 mm, preferably between 5 and 7 mm, and most preferably 6 mm. The second region may have an outer radius between 10 mm and 17 mm, preferably between 12 and 15 mm, and most preferably 14 mm. The third region may have an outer radius between 15 mm and 22 mm, preferably between 16 and 20 mm, and most preferably 17.5 mm.

In preferred embodiments, the third region defines an end surface in the third plane that is the axially outermost surface of the cylindrical secondary cell. Hence, the cell may be rested on a surface by being placed down on the end having the lid, and thereby the third region provides a resting surface.

The axial distances between the first, second, third may be configured to achieve an improved structural rigidity, simplified manufacture, and/or enhanced specialized functionality, as discussed elsewhere herein. For example, the first plane may be axially spaced from the third plane by 1.2 to 2.5 mm, preferably 1.5 to 2.2 mm, and most preferably 1.85 mm.

The second plane is between the first and third planes. Thus, it will be understood that the second region, comprising a vent for venting gases, is axially recessed from the third region, hence providing a protection for the vent.

The electrolyte filling hole may be closed by a sealing cap after the internal of the cell has been filled with electrolyte, through the electrolyte filling hole. The sealing cap may be formed as a rivet, a screw, or the like, and may have some axial extension above the first plane of the first region when installed into the electrolyte filling hole. Hence, in preferred embodiments, and to reliably ensure that the third region provides a stable resting surface, the spacing between the first plane and the third plane may be configured to be equal to or greater than the axial protrusion of the sealing cap. In this way, the sealing cap may not risk disturbing the balance of the cell when the cell is placed into an installation (e.g., a module) or placed onto a surface.

Preferably, the lid is welded directly to the cylindrical casing (which may also be referred to as simply the 'casing' herein). For example, an axially outermost lip of the casing may be bent or folded over a periphery of the lid and welded thereto. In some examples, a beading groove may be formed at the open end of the casing, and the lid may rest on the beading groove. In a particular example, the lid further comprises a fourth region surrounding the third region adapted to attach to the cylindrical casing to thereby close the open end of the cylindrical casing with the lid. Preferably, the lid is attached to the casing without the introduction of any gasket, e.g., using welding such as laser welding.

By folding an end of the casing over a periphery of the lid, the casing and the lid may be welded together from a direction above the lid, where 'above' is used in a sense of being axially beyond the casing and the lid, although from some perspectives, the end of the cell having the lid may be considered as being the 'bottom' of the cell. Although the cell may have no preferred or predefined orientation, for the purposes of illustration in the present disclosure, the end of the cell having the lid may be considered as being the 'bottom' of the cell. During manufacture, the cell may be rotated or flipped as required.

The fourth region extends in a fourth plane axially between the first plane and the third plane. In this way, the third region may form a protruding lip relative to the second and fourth regions, which may advantageously serve as a 'pick-up' feature, i.e., allowing appropriately configured tools to grip onto the lip. In another example where the fourth region or another region extends axially beyond the third region, it will be appreciated that this other region may preferably be configured to form a flat surface for resting the cell on and/or configured with a 'pick-up' feature, as discussed above in connection with the third region.

In some embodiments of the present disclosure, the cell further comprises a current collector, wherein the current collector comprises an electrode contact portion, a lid contact portion, and a flexible portion joining the electrode contact portion and the lid contact portion. In such embodiments, the flexible portion extends axially towards the lid and radially outwards such that an axially outermost part of the flexible portion is also a radially outermost part of the flexible portion. Viewed from one perspective, it can be said that the flexible portion extends 'diagonally' from a radially inner portion of the current collector towards a radially outer portion of the lid.

The flexible portion may allow for a degree of deviation in the axial direction for the electrode roll and the lid, and/or the flexible portion may allow for a reliable electrical contact with the lid when the lid is pressed the contact portion of the current collector.

The current collector may be configured to electrically connect to an end of the electrode roll (e.g., a cathode side or an anode side) via direct contact to protruding electrode foils or 'tabs' that are free from electrode coating. In alternative embodiments, these tabs may be in direct contact with the lid and/or the cell casing. In any event, the lid and/or casing may serve as an electrical terminal for the cell.

The contact portion preferably contacts the lid at a part of the lid that is not the first, second, or third regions. Hence, the configuration of the first, second, and third regions may not be impacted by the contact with the current collector. For example, the current collector can avoid interfering with the vent or the electrolyte filling hole, and the contact portion can be dimensioned according to thermal and/or electrical considerations without further consideration of the dimensions of the first, second, and third regions, and vice versa. In a particular example, the contact portion contacts the lid at the fourth region, discussed above.

Preferably, the current collector is configured not to contact the cylindrical casing. For example, the flexible portion and/or the contact portion may be sized and/or arranged such that, even at an extreme compression of the flexible portion - which, it will be understood, may cause the contact portion to move radially outwards - the casing is not contacted by the current collector. Such an arrangement may thus ensure that the current collector reliably contacts the lid.

The contacting of the contact portion with the lid may advantageously provide a reliable welding contact surface for welding from the outside, i.e., from above the lid (where 'above' is used in the same sense as before). Thus, the lid and casing may be welded together from the same direction as the lid and the current collector are welded together, thereby further simplifying the manufacture of the cell.

According to further aspects of the present disclosure, there is provided a battery pack and a vehicle comprising the battery pack. The battery pack comprises a plurality of cylindrical secondary cells, wherein at least one of the plurality of cylindrical secondary cells is a cylindrical secondary cell substantially as described above.

It will be appreciated by those skilled in the art, and through the description of example embodiments of the present disclosure, that further advantages as well as those described above may be provided by a lid closure according to aspects of the present disclosure. These advantages may be compounded through the provision of multiple cells having such a lid closure, such as in a battery pack, or a vehicle containing the battery pack.

### Brief Description of the Drawings

One or more embodiments of the present disclosure will be described, by way of example only, and with reference to the following figures, in which:
Figure 1 schematically shows a cross-sectional view of an example secondary cell;
Figure 2A schematically shows a cross-sectional view of a portion of a secondary cell having a lid closure according to an example implementation of the present disclosure;
Figure 2B shows a magnified section of the lid closure shown in figure 2A;
Figure 2C shows a top view of the lid closure shown in figure 2A;
Figures 3A and 3B show alternative groove profiles for a vent, according to example implementations of the present disclosure;
Figure 4 schematically shows a cross-sectional view of a portion of a secondary cell having a lid closure according to another example implementation of the present disclosure;
Figure 5 shows a battery pack according to an aspect of the present disclosure; and
Figure 6 shows a vehicle according to an aspect of the present disclosure.

### Detailed Description

The present disclosure is described in the following by way of a number of illustrative examples. It will be appreciated that these examples are provided for illustration and explanation only and are not intended to be limiting on the scope of the present disclosure. Instead, the scope of the present disclosure is defined by the appended claims.

Furthermore, although embodiments may be presented individually for the sake of focused discussion of particular features, it will be recognized that the present disclosure also encompasses combinations of the embodiments described herein.

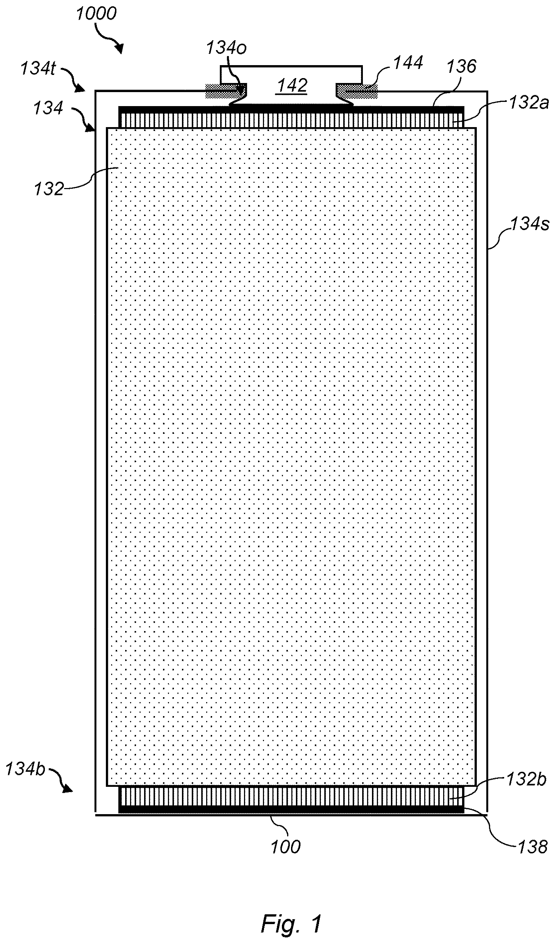

Figure 1 schematically shows a cross-sectional view of a cylindrical secondary cell 1000.

The cylindrical secondary cell 1000 (also referred to as simply the 'cell 1000') comprises an electrode assembly (or 'roll') 132 housed in a cylindrical casing 134. The electrode roll 132 may be formed of an anode sheet, a cathode sheet, and a separator sheet arranged therebetween to thereby enable a storage of electrical energy. Cathode tabs 132a may extend from a first end of the electrode roll 132 and anode tabs 132b may extend from the other end, or vice versa. The cathode tabs 132a and anode tabs provide connective surfaces to which current collectors 136 can be connected. As used here, the "tabs" 132a and 132b can be uncoated portions of the electrode foil extending from the electrode roll 132, rather than additional tabs connected to the electrode roll 132. Hence, the illustrated cell 1000 may be referred to as a 'tabless' cell due to the absence of 'additional' tabs.

The cylindrical casing 134 extends along an axis between a first end 134t, which may be referred to as a 'top end 134t', and a second end, which may be referred to as a 'bottom end 134b'. It will be appreciated that the labels 'top' and 'bottom' are arbitrary, and correspond to the illustration, but may aid in the understanding of the present disclosure.

The bottom end 134b is an open end of the casing 134 closed by a lid 100. The closure of the casing 134 may comprise a clamped closure or a welded closure, depending on the implementation.

For example, the casing 134 may further comprise a beading groove (not shown) formed in the side wall 134s. Hence, between the beading groove and the edge of the side wall 134s towards the bottom end 134b of the casing 134, a clamping portion can be formed. A lid gasket (not shown) may then be clamped around the lid 100 in the clamping portion to thereby seal the open bottom end 134b of the casing 134. Providing a clamped closure in this way is well known in the art and can provide a reliable waterproof seal for the cell.

As another example, the lid 100 may be welded to the casing 134 to thereby seal the casing 134. The lid 100 may be additionally welded to the current collector 138 or, in other examples, the lid 100 may act as a current collector itself and be attached (e.g., welded) to the tabs of the electrode assembly 132. Providing a welded closure in this way may advantageously remove the number of components of the cell 1000 and/or the number of process steps required to manufacture the cell 1000. In preferred embodiments of the present disclosure, the lid 100 is welded to the casing 134 and the current collector 138.

A cathode current collecting plate 136 is arranged in direct electrical contact with the cathode tabs 132a and an anode current collecting plate 138 is arranged in direct electrical contact with the anode tabs 132b. Here, the labels 'cathode' and 'anode' may be swapped. Thus, an electrical connection is formed from the cathode tabs 132a to a terminal assembly 142, as the terminal assembly 142 is connected to the current collecting plate 136.

An electrical connection is also formed from the anode tabs 132b to the lid 100 and/or the casing 134, either directly or through connection of the anode current collecting plate 138 to the casing 134, e.g. in the clamping portion or by welding. One or both or the current collectors 136, 138 may be formed as a disc, a plate, or have some other shape.

A gasket 144 is arranged around the terminal assembly 142 and configured to electrically insulate the terminal assembly 142 from the casing 134. The gasket 144 additionally forms a substantially fluid-tight (i.e., gas-tight) seal for the opening 134o in the casing 134 through which the terminal assembly 142 is arranged.

At either end of the cell 1000, the cell 1000 may further comprise a vent for venting gases, for example during a failure of the cell. Moreover, the cell may comprise an additional through-hole in the lid, for filling the cell with a liquid electrolyte. This through-hole is preferably adapted to be closed from the outside, such as through the use of a blind rivet. Example implementations of such a vent and an electrolyte filling hole are discussed in connection with later figures.

It is seen that a head of the terminal assembly 142 serves as an external terminal of the cell 1000, this being a positive terminal in this example, and the casing 134 serves as the negative terminal. Hence, it is seen that both terminals of the cell 1000 are accessible at the same side. The top end 134t of the casing 134 comprises a first electrical contact surface extending in a first plane, and the head of the rivet 142 comprises a second electrical contact surface, extending in a second plane axially spaced from the first plane. Accordingly, electrical connections to each of the first and second electrical contact surfaces are advantageously simplified.

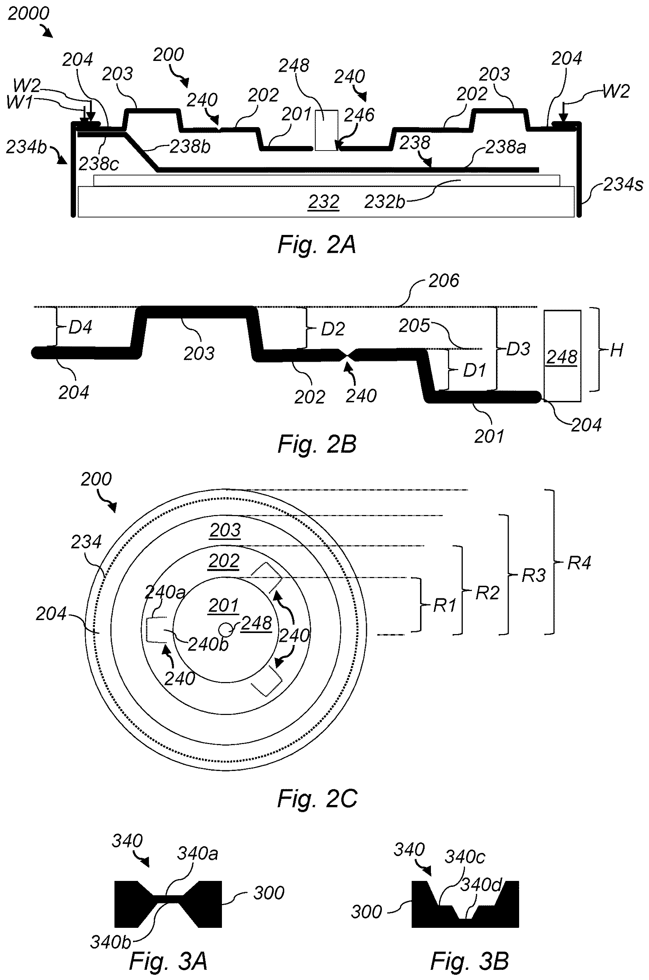

Figures 2A, 2B, and 2C schematically show cross-sectional views of a bottom end portion of a cell 2000, which may be substantially similar in its overall construction to the cell 1000 shown in figure 1, and reference numerals corresponding to those used in figure 1, but increased by 100, may indicate elements that are the same or substantially similar to those shown in figure 1. Accordingly these repeated elements may not be discussed again in detail. However, the illustrated bottom end 234b of the casing 234 (corresponding to the open bottom end 134b shown in figure 1) is shown upside down in figure 2A, relative to figure 1, and the configuration of the lid 200, the current collector 238, and the casing 234 are shown in more detail in this illustrated example.

The cell 2000 comprises an electrode assembly 232 housed in a casing 234, where the casing 234 is cylindrical and comprises a sidewall 234s extending axially and terminating at an open end 234b of the casing 234. Here, the edge of the open end 234b of the casing 234 comprises a flange extending inwards from the sidewall 234s, substantially perpendicular to the sidewall 234s.

Protruding from the electrode assembly 232 are electrode tabs 232b, which may be uncoated portions of electrode. A current collector 238 is arranged in direct electrical contact with the tabs 232b. Specifically, an electrode contact portion 238a is in direct electrical contact with the tabs 232b.

A lid 200 closes the open bottom end 234b of the casing 234, and the current collector 238 is further connected to the lid 200 via a contact portion 238c and a flexible portion 238b connecting the electrode contact portion 238a to the contact portion 238c. As shown in figure 2A, the flexible portion 238b extends axially towards the lid 200 and radially outwards such that an axially outermost part of the flexible portion 238b is a radially outermost part of the flexible portion 238b.

The lid 200 comprises a plurality of regions 201, 202, 203, and 204. Figure 2B shows an enhanced view of the left side of the lid 200 as shown in figure 2A, and figure 2C shows a top view of the lid 200 shown in figure 2A.

As shown most clearly in figure 2C, in this example, each of the regions 201, 202, 203, and 204 is circular and concentric with each other. The lid 200 comprises a first region 201 extending in a first plane 204 (the planes 204, 205, 206 being shown most clearly in figure 2B), a second region 202 surrounding the first region 201 and extending in a second plane 205 displaced in a first direction (i.e., upwards, as shown in figure 2B) from the first plane 201, a third region 203 surrounding the second region 202 and extending in a third plane 206 displaced in the first direction from the second plane 202.

The first region 201 comprises an electrolyte filling hole 246 and the second region 202 comprises a plurality of vents 240 configured to vent gases from the cylindrical casing 234, although in some examples the second region 202 may only comprise one vent 240.

As shown in figure 2A, the electrolyte filling hole 246 is sealed by a sealing cap 248, which may be formed as a blind rivet or the like. The distance D3 between the first plane 204 and the third plane 206 may be configured to correspond to the height H of the sealing cap 248 when it is installed in the electrolyte filling hole 246, or the distance D3 may be configured to be greater than the height H of the sealing cap 248.

It can be seen that the third region 203 forms a flat axially outermost surface, and thus the cell 2000 may be stably and safely rested on the surface formed by the third region 203 without risking damage to the vent 240 or the electrolyte filling hole 246, which are recessed relative thereto, and the height H of the sealing 248 does not risk extending beyond this resting surface, i.e., the surface in the third plane 206.

The lid 200 further comprises a fourth region 204 around the third region 203, where the fourth region 204 extends in a fourth plane axially spaced in a second direction opposite the first direction from the third region 203.

In this way, the third region 203 - or, more particularly, the interface surfaces between the third region and second and fourth regions 202, 204 - forms a 'pick-up' feature, whereby an appropriately configured tool such as a gripper tool or the like can grip the protrusion formed around the third region 203. It can further be seen that, by spacing the vents 240 from the third region 203, a risk of damage to the vents 240 by a gripper tool can also be mitigated.

Moreover, by recessing the fourth region 204 relative to the third region 203, the flange at the end 234b of the casing 234 can be arranged thereover and welded thereto, e.g., via a welding laser directed from the top down, as shown in figure 2A. It can be seen that, were the fourth region 204 not recessed relative to the third region 203 in this way, then the first region 201 may extend further into the internal volume of the cell 200, thereby risking a reduction of the energy density of the cell, e.g., as the height of the electrode roll 232 may have had to have been reduced accordingly.

Example welding locations W1 and W2 are shown in figure 2A. A first weld W1 may attached the contact portion 238c of the current collector 238 to the lid 200, and a second weld W2 may attach the casing 234 to the lid 200. As shown in the figure, the welding direction of both the welds W1 and W2 (e.g., direction of a welding laser) are substantially aligned with the axial extension of the cell 2000, i.e., the welding is from 'above' in respect of the orientation of the figure. Specifically, in this example, the bottom end 234b of the casing 234 comprises a flange extending radially inwards at substantially 90 degrees (which may be folded), wherein the flange overlaps the first weld W1 between the current collector 238 and the lid 200. The second weld W2 is further towards the radial center of the lid 200 and may extend in a circular manner around the flange, the overlap of the flange with the lid being shown as a dashed line in figure 2C. In this way, the first weld W1 is covered by the folded-over flange of the casing 234.

In some examples, the second weld W2 may be radially further from the center than the first weld W1, or the second weld W2 may be aligned axially with the first weld W1, i.e., such that the welds W1 and W2 are on top of each other. In further examples, both the first weld W1 and the second weld W2 may be performed simultaneously (e.g., with welding heat penetrating through the flange, then the lid 200, to the current collector 238). However, in preferred examples, the second weld W2 is radially further in than the first weld W1, thereby protecting the first weld W1 location from corrosion. Moreover, in preferred examples, the first weld W1 and the second weld W2 are at least radially spaced apart from each other (i.e., not overlapping) such that the lid 200, the current collector 238, and/or the can 234 are not excessively heated, which could damage these components or surrounding components.

In this preferred example, the first region 201 has an outer radius R1 of 6 mm, the second region 202 has an outer radius R2 of 14 mm, the third region 203 has an outer radius R3 of 17.5 mm, and the outer radius of the fourth region 204 substantially defines the outer radius of the cell 2000, which may be 23 mm.

The transitions between the regions 201, 202, 203, and 204 are shown in figure 2C as having no radial extension. However, as shown in figures 2A and 2B, it will be understood that these transition portions may have some radial extension, and may comprise straight and/or curved surfaces, depending on the implementation and/or, for example, the means used to manufacture the lid 200.

Preferably, the transition portions between the regions 201, 202, 203, and 204 are configured to use a minimal amount of material, and such that the material thickness of the lid 200 is consistent throughout (e.g., by including some radius allowance at the bends).

The contact portion 238c of the current collector 238 is shown contacting the inner surface of the fourth region 204 of the lid 200, but not contacting the casing 234. The downward pressure of the lid 200 against the contact portion 238c may cause the flexible portion 238b to flex, and the contact portion 238c may, in such cases, slide radially outwards. However, in preferred embodiments, the flexible portion 238b and the contact portion 238c may be configured (e.g., sized) to prevent contact with the casing 234 even when substantially depressed by the lid 200, as such contact may cause the lid 200 to be lifted by the current collector 238 and/or the current collector 238 to be pushed into the electrode assembly 232, thereby causing damage.

By contacting the lid 200 outside of the first, second, or third regions 201, 202, 203, these regions 201, 202, 203 may not require configuration to accommodate such contact with the current collector. Hence, a greater design freedom is afforded to these regions 201, 202, 203 of the lid 200. Moreover, by contacting the lid 200 towards a periphery thereof, wherein the end 234b of the casing 234 is also folded over the periphery, a welding of the casing 234 to the lid 200, and the lid 200 to the current collector 238, may be streamlined. Moreover, both of these welding processes may be performed using a laser welding process directed from above (as shown in figure 2A).

Figure 2C shows three vents 240 arranged in a radially symmetric fashion around the second region 202. Each vent 240 is formed with a weakened portion 240a, such as a groove, formed as an open shape (i.e., a shape with a different starting and ending point). Between the starting and ending point, a non-weakened part 240b serves as an anchoring part such that, upon a build-up of gas within the cell 2000 above a certain pressure, the weakened portion 240a will rupture and cause the portion of the lid 200 within the open shape to bend or otherwise open, this portion being held without breaking off of the lid 200 by the non-weakened portion 240b.

Figure 3A shows an example profile for a vent 340, which may be formed on a lid in a similar manner as the vent 240 shown in figures 2A, 2B, and 2C. The vent 340 is formed as a first groove 340a in the outer surface of the lid 300, and a second groove 340b in the inner surface of the lid 300. Both the grooves 340a and 340b have a substantially trapezoidal shape.

Figure 3B shows an alternative profile for a vent 340, which may be provided instead of or in addition to the profile shown in figure 3A. That is, in some examples, some vent(s) may be formed with the profile shown in figure 3A, and some may be formed with the profile shown in figure 3B.

The vent 340 shown in figure 3B comprises a primary groove 340c formed in the outer surface of the lid 300, and a secondary 'sub-groove' 340d extending deeper into the outer surface of the lid 300 that the primary groove 340c. No groove is formed in the inner surface of the lid 300, in this example. Both the primary groove 340c and the secondary groove 340d have a substantially trapezoidal shape. The trapezoidal shape of the secondary groove 340d is smaller in height and width than that of the primary groove 340c, and is centered therein.

The configuration of the grooves 340c, 340d shown in figure 3D may be easier to manufacture than the grooves 340a and 340b shown in figure 3A, may further provide a more reliable venting action.

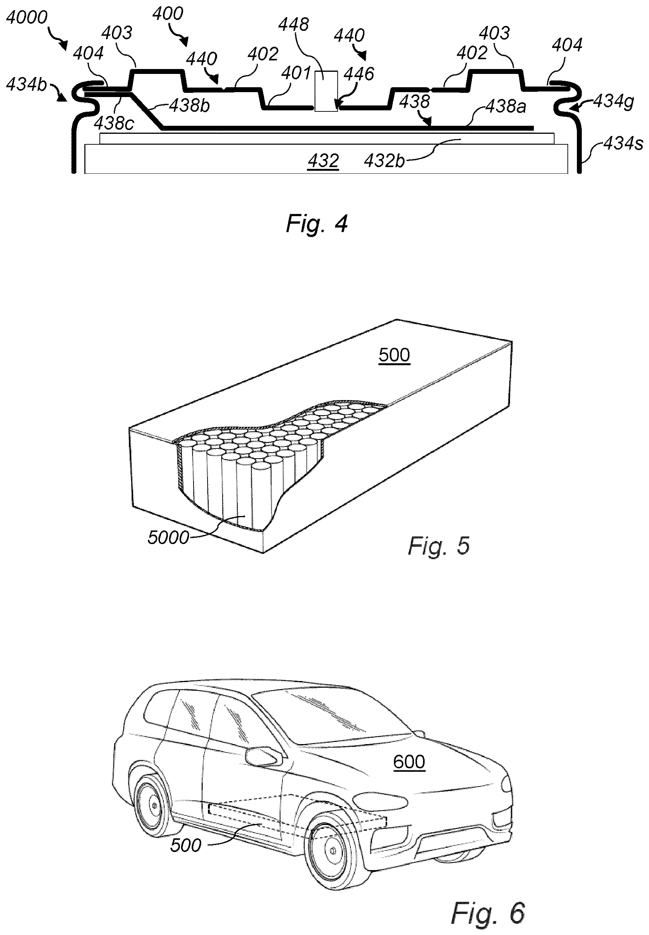

Figure 4 schematically shows a cross-sectional views of a bottom end portion of a cell 4000, where the cell 4000 may substantially correspond to that shown in figure 2A, and reference numerals corresponding to those used in figure 2A, but increased by 200, may indicate elements that are the same or substantially similar to those shown in figure 2A. Accordingly these repeated elements are not discussed again in detail.

A difference of the cell 4000 shown in figure 4, relative to the cell 2000 shown in figure 2A, is that the cell 4000 comprises a beading groove 434g. The contact portion 438c of the current collector 438 and the periphery of the lid 400 - including, in this example, a part of the fourth region 404 of the lid 400 - rests on a surface formed by the beading groove and are sandwiched between this surface and an edge of the end 434b of the casing 434.

In this way, a clamping portion is formed by the beading groove 434g. Hence, the contact portion 438c and the lid may be clamped together within this clamping portion. In some examples, a gasket may be arranged around the lid 400 and/or the current collector 438, but in preferred examples, no gasket is used. After clamping, a welding laser may be directed onto the clamping portion to thereby form a more reliable seal of the casing 434.

It can be seen that such a clamping portion may form a simultaneous sealing of the casing 434 and electrical connection between the lid 400 and the casing 434 and, in this example, the current collector 438, although it will be appreciated that, in some examples, the current collector 438 may not be included in the cell 4000 or may not be introduced into the clamping portion.

Figure 5 shows a perspective view of a battery pack 500 with a portion of its casing (being illustrated in a purely schematic way) cut away to schematically show a plurality of secondary cells 1000 housed therein. The secondary cells 1000 may correspond to the secondary cell 1000 described above and may comprise a lid closure substantially as described above.

The secondary cells 100 are connected together in series and/or parallel, and in an optionally modular fashion, so as to form a combined electrical storage capacity. In some examples, the cells have a common orientation such that failure vents of the cells are oriented in a same direction, and such that the terminals of the cells (which may be on the same side, as discussed in relation to figure 1) can be accessed at a same side.

Figure 6 schematically shows an example vehicle 600 comprising the battery pack 500 shown in figure 5. In this example, the battery pack is arranged at a lower portion of the vehicle 600, which may be an electric or hybrid vehicle. Other uses for the battery pack 500 may comprise a standalone battery pack for powering devices or installations or the like.

It will be appreciated that the advantages described above in respect of, e.g., energy density, conferred to the secondary cells according to aspects of the present disclosure, will also be conferred to a battery pack comprising said cells, and any vehicle comprise such a battery pack. Thus, these advantages are not discussed in detail again.

While the present disclosure is susceptible to various modifications and alternative forms, specific embodiments are shown and described above by way of example in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims.

The present disclosure may be better understood through consideration of the following numbered clauses:
1. A cylindrical secondary cell, comprising:
   a cylindrical casing housing an electrode assembly; and
   a lid for closing an open end of the cylindrical casing, wherein
   the lid comprises:
      a first region extending in a first plane,
      wherein the first region comprises an electrolyte filling hole;
   a second region surrounding the first region and extending in a second plane displaced in a first direction from the first plane,
      wherein the second region comprises a vent configured to vent gases from the cylindrical casing; and
   a third region surrounding the second region and extending in a third plane displaced in the first direction from the second plane.
2. The cylindrical secondary cell according to clause 1, wherein each of the first, second, and third regions is circular.
3. The cylindrical secondary cell according to clause 1 or clause 2, wherein each of the first, second, and third regions is concentric.
4. The cylindrical secondary cell according to any preceding clause, wherein the electrolyte filling hole is arranged centrally in the first region.
5. The cylindrical secondary cell according to any preceding clause, wherein the first region has an outer radius between 5 mm and 10 mm, preferably between 5 and 7 mm, and most preferably 6 mm.
6. The cylindrical secondary cell according to any preceding clause, wherein the second region has an outer radius between 10 mm and 17 mm, preferably between 12 and 15 mm, and most preferably 14 mm.
7. The cylindrical secondary cell according to any preceding clause, wherein the third region has an outer radius between 15 mm and 22 mm, preferably between 16 and 20 mm, and most preferably 17.5 mm.
8. The cylindrical secondary cell according to any preceding clause, wherein the first plane is axially spaced from the third plane by 1.2 to 2.5 mm, preferably 1.5 to 2.2 mm, and most preferably 1.85 mm.
9. The cylindrical secondary cell according to any preceding clause, wherein the third region defines an end surface in the third plane that is the axially outermost surface of the cylindrical secondary cell.
10. The cylindrical secondary cell according to any preceding clause, further comprising a fourth region surrounding the third region adapted to attach to the cylindrical casing to thereby close the open end of the cylindrical casing with the lid.
11. The cylindrical secondary cell according to clause 10, wherein the fourth region extends in a fourth plane axially between the first plane and the third plane.
12. The cylindrical secondary cell according to any preceding clause, further comprising a current collector, wherein the current collector comprises an electrode contact portion, a lid contact portion, and a flexible portion joining the electrode contact region and the lid contact region, wherein the flexible portion extends axially towards the lid and radially outwards such that an axially outermost part of the flexible portion is a radially outermost part of the flexible portion.
13. The cylindrical secondary cell according to clause 12, wherein the contact portion contacts the lid at a part of the lid outside the first, second, or third regions.
14. The cylindrical secondary cell according to clause 13, when depending from claim 10 or claim 11, wherein the contact portion contacts the lid at the fourth region.
15. The cylindrical secondary cell according to any of clauses 12 to 14, wherein the current collector does not contact the cylindrical casing.
16. A battery pack comprising a plurality of cylindrical secondary cells, wherein at least one of the plurality of cylindrical secondary cells is a cylindrical secondary cell according to any preceding clause.
17. A vehicle comprising the battery pack according to clause 16.

## Claims

1. A cylindrical secondary cell, comprising:
a cylindrical casing housing an electrode assembly; and
a lid for closing an open end of the cylindrical casing, wherein
the lid comprises:
a first region extending in a first plane,
wherein the first region comprises an electrolyte filling hole;
a second region surrounding the first region and extending in a second plane displaced in a first direction from the first plane,
wherein the second region comprises a vent configured to vent gases from the cylindrical casing; and
a third region surrounding the second region and extending in a third plane displaced in the first direction from the second plane.

2. The cylindrical secondary cell according to claim 1, wherein each of the first, second, and third regions is circular, and/or wherein each of the first, second, and third regions is concentric, and/or wherein the electrolyte filling hole is arranged centrally in the first region.

3. The cylindrical secondary cell according to any claim 1 or claim 2, wherein the third region defines an end surface in the third plane that is the axially outermost surface of the cylindrical secondary cell.

4. The cylindrical secondary cell according to any preceding claim, further comprising a fourth region surrounding the third region adapted to attach to the cylindrical casing to thereby close the open end of the cylindrical casing with the lid.

5. The cylindrical secondary cell according to claim 4, wherein the fourth region extends in a fourth plane axially between the first plane and the third plane.

6. The cylindrical secondary cell according to any preceding claim, further comprising a current collector, wherein the current collector comprises an electrode contact portion, a lid contact portion, and a flexible portion joining the electrode contact region and the lid contact region, wherein the flexible portion extends axially towards the lid and radially outwards such that an axially outermost part of the flexible portion is a radially outermost part of the flexible portion.

7. The cylindrical secondary cell according to claim 6, wherein the contact portion contacts the lid at a part of the lid outside the first, second, or third regions.

8. The cylindrical secondary cell according to claim 7, when depending from claim 3 or claim 4, wherein the contact portion contacts the lid at the fourth region.

9. A battery pack comprising a plurality of cylindrical secondary cells, wherein at least one of the plurality of cylindrical secondary cells is a cylindrical secondary cell according to any preceding claim.

10. A vehicle comprising the battery pack according to claim 9.
